# EUROPÄISCHE PATENTSCHRIFT

(11) **EP 3 294 437 B1**
(45) Veröffentlichungstag und Bekanntmachung des Hinweises auf die Patenterteilung: **17.07.2019**
(21) Anmeldenummer: 16726283.1
(22) Anmeldetag: 11.05.2016
(51) Int. Cl.: B01D 46/00, B01D 46/02, B01D 46/06

(54) **FILTERBEUTEL FÜR TASCHENLUFTFILTER**
FILTER BAG FOR POCKET AIR FILTERS
SAC FILTRANT POUR FILTRE À AIR À POCHE

(30) Priorität: 12.05.2015 DE 102015107481
(43) Veröffentlichungstag der Anmeldung: 21.03.2018
(73) Patentinhaber: Kluge Luftfilter GmbH, 63225 Langen (DE)
(72) Erfinder: KLUGE, Klaus, 63225 Langen (DE)
(74) Vertreter: Habermann Intellectual Property Partnerschaft von Patentanwälten mbB
(86) Internationale Anmeldenummer: PCT/EP2016/060522
(87) Internationale Veröffentlichungsnummer: WO 2016/180862

(56) Entgegenhaltungen:
- EP-A1- 0 663 228
- WO-A1-99/37385
- WO-A1-99/38599
- DE-A1-102005 035 090

## Beschreibung

Die Erfindung betrifft einen Filterbeutel für Taschenluftfilter mit zwei aneinander anliegenden Seitenteilen aus einem luftdurchlässigen, mittels Ultraschall schweißbaren Filtermaterial. Die Seitenteile sind in Seitenrandabschnitten auf drei Seiten der Seitenteile durchgehend miteinander verschweißt, so dass durch die zwei miteinander verschweißten Seitenteile eine Tasche mit zwei einander gegenüberliegenden Seitenkanten, einer Bodenkante und einer der Bodenkante gegenüberliegenden Öffnung gebildet wird.

In der Tasche sind mehrere Stege aus einer flexiblen Materialbahn ausgebildet. Die Stege verbinden die Seitenteile miteinander und sind von einer Öffnungsseite des Filterbeutels in Richtung der Bodenkante verlaufend ausgerichtet.

Die flexible Materialbahn ist abwechselnd mit jeweils einem der Seitenteile in Schweißabschnitten mindestens bereichsweise verbunden. Die Schweißabschnitte werden durch mindestens eine Schweißnaht längs zur Strömungsrichtung begrenzt, so dass die flexible Materialbahn in einem Schweißabschnitt jeweils ausschließlich mit einem Seitenteil verbunden ist.

Die Stege werden durch Stegabschnitte der flexiblen Materialbahn gebildet. Die Stegabschnitte verlaufen jeweils zwischen zwei benachbarten Schweißabschnitten, durch die die flexible Materialbahn mit beiden einander gegenüberliegenden Seitenteilen verbunden ist. Jeweils eine durch eine Länge eines Stegabschnitts zwischen den Seitenteilen definierte Stegabschnittsbreite der Stegabschnitte nimmt von der Öffnungsseite zu der Bodenkante hin ab.

Taschenluftfilter werden zur Luftreinigung eingesetzt, wobei üblicherweise mehrere Filterbeutel beabstandet zueinander in dem Taschenluftfilter angeordnet werden. Zur Reinigung eines Luftstroms wird der Taschenluftfilter so in dem Luftstrom angeordnet, dass die Seitenteile der Filterbeutel von der jeweiligen Öffnungsseite her mit Luft durchströmt werden und in der Luft enthaltene Partikel an den Seitenteilen abgeschieden werden.

Um eine möglichst gute Filterwirkung zu erreichen und die von den Seitenteilen gebildete Filterfläche möglichst weitgehend auszunutzen, werden die Filterbeutel üblicherweise so ausgestaltet, dass eine gleichmäßige Durchströmung der gesamten Filterfläche erreicht wird. Zu diesem Zweck ist es erforderlich, den Abstand der Filterbeutel eines Taschenluftfilters anzupassen und insbesondere zu verhindern, dass Seitenteile benachbart angeordneter Filterbeutel aneinander anliegen, da hierdurch die wirksame Filterfläche erheblich reduziert werden würde.

Daher weisen herkömmliche Filterbeutel üblicherweise einen Querschnittsverlauf von der Öffnung hin zur Bodenkante auf, bei dem der Querschnitt kontinuierlich abnimmt. Dies wird durch die Verbindung der einander gegenüberliegenden Seitenteile eines Filterbeutels durch die Stege erreicht, durch die der Abstand der Seitenwände eines Filterbeutels und dadurch indirekt auch der Abstand dieses Filterbeutels zu einem in dem Taschenluftfilter benachbart angeordneten Filterbeutel vorgegeben werden können.

Ein Herstellungsverfahren solcher Filterbeutel wird in der Druckschrift EP 1 049 527 B1 beschrieben. Bei dem in dieser Druckschrift beschriebenen Verfahren werden die Filterbeutel aus zwei Bahnen des Filtermaterials sowie der flexiblen Materialbahn hergestellt. Diese Bahnen laufen in eine geeignete Schweißvorrichtung, wobei die flexible Materialbahn zwischen den Filtermaterialbahnen angeordnet ist und der Schweißvorrichtung zugeführt wird.

Die Schweißvorrichtung weist mehrere Sonotroden auf, mit denen die Filtermaterialbahnen sowie die flexible Materialbahn durch Ultraschall miteinander verschweißt werden können. Um abwechselnd nur eine der Filtermaterialbahnen mit der flexiblen Materialbahn zu verschweißen, weist die Schweißvorrichtung zusätzlich verlagerbare Platten auf, die zwischen der flexiblen Materialbahn und den Filtermaterialbahnen verlagerbar angeordnet sind und verhindern, dass die flexible Materialbahn mit der Filtermaterialbahn verschweißt wird, die beim Schweißen durch eine Platte von der flexiblen Materialbahn getrennt wird. Durch das abwechselnde Verschweißen der flexiblen Materialbahn mit den beiden Filtermaterialbahnen werden zwischen den Filtermaterialbahnen Stege aus dem flexiblen Material der Materialbahn gebildet.

Um einen sich kontinuierlich verringernden Abstand der Seitenteile durch die Stege von der Öffnungsseite hin zur Bodenkante zu ermöglichen, ist es erforderlich, dass die Stegabschnittsbreite bzw. Stegbreite der Stegabschnitte bzw. Stege von der Öffnungsseite zur Bodenkante hin abnimmt. Dies wird bei den aus dem Stand der Technik bekannten Filterbeuteln dadurch erreicht, dass benachbarte Schweißabschnitte, mit denen die flexible Materialbahn jeweils mit einem der Seitenteile verschweißt ist, auf einer der Öffnungsseite zugewandten Seite der Schweißabschnitte einen größeren Abstand zueinander aufweisen als auf einer der Bodenkante zugewandten Seite.

Um auch einen entsprechenden Abstand der Seitenteile im Bereich der Seitenkanten des Filterbeutels zu ermöglichen, ist es bei den aus dem Stand der Technik bekannten Filterbeuteln zudem vorgesehen, dass die Seitenteile trapezförmig ausgestaltet sind, so dass ein Abstand zwischen den Seitenkanten und den zu den Seitenkanten jeweils benachbart angeordneten Schweißabschnitten ebenfalls von der Öffnungsseite zu der Bodenkante hin abnimmt. Durch die trapezförmige Ausgestaltung wird erreicht, dass durch die flexible Materialbahn zwischen den äußersten Schweißabschnitten und den Seitenkanten, an denen beide Seitenteile miteinander und mit der flexiblen Materialbahn verschweißt sind, ebenfalls ein Stegabschnitt gebildet wird, der eine abnehmende Stegabschnittsbreite aufweist. Durch die erforderlich trapezförmige Ausgestaltung der Filterbeutel wird die zur Verfügung stehende Filterfläche reduziert.

Die Seitenteile hochwertiger Filterbeutel weisen auch aus anderen Gründen, wie beispielsweise eine Erleichterung des Einbaus, eine Trapezform auf. Allerdings ist ein Winkel der Seitenkanten zueinander bzw. zu der Bodenkante im Wesentlichen durch den erwünschten Queschnittsverlauf der Filterbeutel in dem eingebauten und durchströmten Zustand bzw. in Einbaulage bestimmt.

Als Aufgabe der Erfindung wird es angesehen, einen Filterbeutel für Taschenluftfilter bereitzustellen, bei der die für die Filterung zur Verfügung stehende Filterfläche vergrößert werden kann.

Diese Aufgabe wird erfindungsgemäß dadurch gelöst, dass eine Schweißabschnittsbreite mindestens eines Schweißabschnitts von der Öffnungsseite in Richtung der Bodenkante mindestens abschnittsweise zunimmt. Dadurch, dass die Schweißabschnittsbreite in Richtung der Bodenkante zunimmt, verringern sich gleichzeitig die Stegabschnittsbreiten der Stegabschnitte zwischen diesem Schweißabschnitt und den benachbarten Schweißabschnitten. Daher kann der Verlauf des Abstands der Seitenteile voneinander durch die Stegabschnittsbreite einfach vorgegeben und unabhängig von der äußeren Form bzw. der Grundfläche der Seitenteile angepasst werden. Die erfindungsgemäß vorgesehene Variation der Stegabschnittsbreite bietet also einen weiteren Freiheitsgrad bei der Gestaltung der Filterbeutel für Taschenluftfilter.

Durch die Variation der Stegabschnittsbreite ist es auch auf besonders einfache Weise möglich, Stegabschnitte mit unterschiedlich verlaufenden Stegabschnittsbreiten bei dem Filterbeutel herzustellen. Um einen möglichst gleichmäßigen Verlauf der Stegabschnittsbreiten der Stege des Stegabschnitts zu ermöglichen, ist erfindungsgemäß vorgesehen, dass die Schweißabschnittsbreiten der Schweißabschnitte, mit denen die flexible Materialbahn mit einem der Seitenteile verschweißt sind, von der Öffnungsseite in Richtung der Bodenkante mindestens abschnittsweise zunehmen. Es ist aber auch möglich und erfindungsgemäß vorgesehen, dass die Stegabschnittsbreiten sämtlicher Stegabschnitte von der Öffnungsseite zur Bodenkante hin zunehmen.

Bei einer besonders vorteilhaften Ausgestaltung des erfindungsgemäßen Filterbeutels ist vorgesehen, dass mindestens ein Schweißabschnitt V-förmig ausgestaltet ist, so dass die Schweißabschnittsbreite des mindestens einen Schweißabschnitts von der Öffnungsseite in Richtung der Bodenkante zunimmt. Durch einen V-förmig ausgestalteten Schweißabschnitt kann eine kontinuierliche Abnahme der Stegabschnittsbreite vorgegeben werden.

Vorteilhafterweise ist vorgesehen, dass der V-förmige Schweißabschnitt durch eine V-förmig ausgestaltete Stegschweißnaht gebildet ist, so dass eine Stegschweißnahtbreite der Stegschweißnaht von der Öffnungsseite in Richtung der Bodenkante zunimmt. Zur Herstellung einer solchen V-förmig ausgestalteten Stegschweißnaht können entweder entsprechend V-förmig ausgestaltete Sonotroden eingesetzt werden oder die Schweißnaht durch herkömmliche Sonotroden mit gleichbleibender Schweißbreite dadurch hergestellt werden, dass die Sonotroden bei der Herstellung der Schweißnaht mehrfach unter verschiedenen Winkeln aufgesetzt werden, so dass die V-förmig ausgestaltete Schweißnaht durch mehrere Schweißvorgänge hergestellt wird.

Es ist aber möglich und erfindungsgemäß vorgesehen, dass der V-förmige Schweißabschnitt durch zwei benachbart zueinander angeordnete Stegschweißnähte gebildet wird, wobei die Stegschweißnähte so angeordnet sind, dass ein Abstand der Stegschweißnähte von der Öffnungsseite in Richtung der Bodenkante zunimmt. Dadurch kann der V-förmige Schweißabschnitt durch lediglich zwei Stegschweißnähte gebildet werden. Auf diese Weise wird zum einen der Herstellungsprozess vereinfacht und zum anderen erreicht, dass der zwischen den Stegschweißnähten liegende und nicht verschweißte Bereich des jeweiligen Seitenteils zur Filterung verwendet werden kann, so dass die effektive Filterfläche weiter vergrößert werden kann.

Bei der Verwendung zweier benachbart zueinander angeordneter Stegschweißnähte ist vorteilhafterweise vorgesehen, dass die Stegschweißnähte auch zur Öffnungsseite hin einen Abstand zueinander aufweisen, so dass einströmende Luft auch unmittelbar in den Bereich einströmen kann, der von der flexiblen Materialbahn und dem Seitenteil zwischen den V-förmig angeordneten Stegschweißnähten gebildet ist.

Um eine lineare Abnahme der Stegabschnittsbreite zu erreichen ist erfindungsgemäß vorgesehen, dass die Schweißabschnittsbreite linear zunimmt.

Ein expotentiell abnehmender Verlauf der Stegabschnittsbreite kann dadurch erreicht werden, dass die Schweißabschnittsbreite expotentiell zunimmt. Durch die erfindungsgemäße Variation der Schweißabschnittsbreite können nahezu beliebige Verläufe der Stegabschnittsbreiten vorgegeben werden.

Bei einer besonders vorteilhaften Ausgestaltung des erfindungsgemäßen Filterbeutels ist vorgesehen, dass die Stegabschnittsbreite mindestens eines Stegabschnitts kontinuierlich bis auf null abnimmt.

Dadurch, dass die Stegabschnittsbreite durch die Variation der Schweißabschnittsbreite nahezu beliebig vorgegeben werden kann, ist es bei dem erfindungsgemäßen Filterbeutel möglich, die Form der Seitenteile unabhängig von dem gewünschten und vorgesehenen Querschnittsverlauf des Filterbeutels in Einbaulage anzupassen und vorzugeben. Sofern eine trapezförmige Form der Seitenteile beispielsweise für eine erleichterte Montage sinnvoll und erforderlich ist, kann der Winkel der Seitenkanten zu der Bodenkante entsprechend vorgegeben werden, wobei der Querschnittsverlauf zunächst nicht berücksichtigt werden muss. Daher ist die Grundfläche der Seitenteile im Wesentlichen durch den verwendeten Taschenluftfilter und die jeweilige Einbausituation bestimmt. Bei den herkömmlichen Filterbeuteln sind die Winkel der Seitenteile zu der Bodenkante vergleichsweise groß und die effektive Filterfläche entsprechend verringert, um den gewünschten Querschnittsverlauf zu erreichen. Bei den erfindungsgemäß ausgestalteten Filterbeuteln können diese Winkel erheblich reduziert werden.

Um den Druckabfall über dem Filterbeutel möglichst gering zu halten, ist erfindungsgemäß vorgesehen, dass die flexible Materialbahn luftdurchlässig ist. Auf diese Weise kann die Durchströmgeschwindigkeit der Luft durch die Seitenteile über die gesamte Fläche der Seitenteile weitestgehend konstant gehalten werden. Bei der flexiblen Materialbahn kann es sich erfindungsgemäß beispielsweise um ein luftdurchlässiges Vlies oder um ein grobmaschiges Gewebe handeln.

Weitere vorteilhafte Ausgestaltungen des erfindungsgemäßen Filterbeutels werden anhand von in der Zeichnung dargestellten Ausführungsbeispielen näher erläutert.

Es zeigt:
Figur 1 eine schematisch dargestellte Draufsicht auf einen Filterbeutel mit einem V-förmig ausgestalteten und durch zwei benachbart zueinander angeordnete Stegschweißnähte begrenzten Schweißabschnitt,
Figur 2 eine schematisch ausschnittsweise geschnitten dargestellte Ansicht des in Figur 1 dargestellten Filterbeutels und
Figur 3 eine schematisch ausschnittweise geschnitten dargestellte Ansicht eines Filterbeutels mit einem durch eine V-förmig ausgestaltete Stegschweißnaht gebildeten V-förmigen Schweißabschnitt.

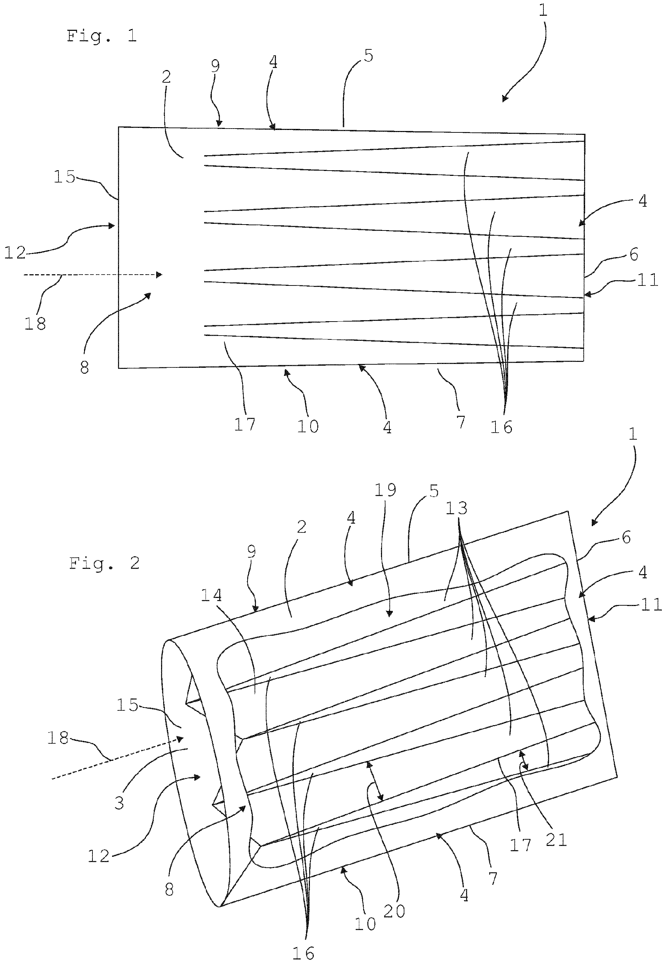

In Figuren 1 und 2 sind eine Draufsicht und eine ausschnittsweise geschnitten dargestellte Ansicht eines Filterbeutels 1 schematisch dargestellt. Der Filterbeutel 1 weist zwei aneinander anliegende Seitenteile 2 und 3 auf, die in Seitenrandabschnitten 4 auf drei Seiten 5,6 und 7 der Seitenteile 2 und 3 durchgehend miteinander verschweißt sind. Auf diese Weise bilden die miteinander verschweißten Seitenteile 2 und 3 eine Tasche 8 mit zwei einander gegenüberliegenden Seitenkanten 9 und 10, einer Bodenkante 11 und einer der Bodenkante 11 gegenüberliegenden Öffnung 12.
In der Darstellung der Figur 2 ist das Seitenteil 2 ausschnittsweise geschnitten dargestellt.

Innerhalb der Tasche 8 sind mehrere Stege 13 aus einer flexiblen Materialbahn 14 angeordnet, wobei die Stege 13 die Seitenteile 2 und 3 miteinander verbinden und von einer Öffnungsseite 15 des Filterbeutels 1 in Richtung der Bodenkante 11 verlaufend ausgerichtet sind.

Die flexible Materialbahn 14 ist abwechselnd mit jeweils einem der Seitenteile 2 und 3 in Schweißabschnitten 16 verbunden. Die Schweißabschnitte 16 sind V-förmig ausgestaltet und werden jeweils durch zwei benachbart zueinander V-förmig angeordnete Stegschweißnähte 17 begrenzt, wobei die Stegschweißnähte 17 längs zu einer Strömungsrichtung 18, in der Luft den Filterbeutel 1 in Einbaulage durchströmt, ausgerichtet sind. In den Schweißabschnitten 16 ist die flexible Materialbahn 14 jeweils ausschließlich entweder mit dem Seitenteil 2 oder dem Seitenteil 3 verbunden. In den Figuren ist jeweils eine Stegschweißnaht 17 exemplarisch mit einem Bezugszeichen gekennzeichnet.

Die Stege 13 werden durch Stegabschnitte 19 der flexiblen Materialbahn 14 gebildet, wobei die Stegabschnitte 19 jeweils zwischen zwei benachbarten Schweißabschnitten 16 verlaufen. In den Figuren ist wiederum jeweils ein Stegabschnitt 19 exemplarisch mit einem Bezugszeichen gekennzeichnet.

Eine Stegabschnittsbreite 20, die durch eine Länge des jeweiligen Stegabschnitts 19 zwischen den Seitenteilen 2 und 3 definiert ist, nimmt auf Grund der V-förmigen Ausgestaltung der Schweißabschnitte 16 von der Öffnungsseite 15 in Richtung der Bodenkante 11 hin ab. Eine Schweißabschnittsbreite 21 der Schweißabschnitte 16 nimmt hingegen von der Öffnungsseite 15 in Richtung der Bodenkante 11 hin zu. Durch den auf diese Weise vorgegebenen Abstandsverlauf der Seitenteile 2 und 3 zueinander, konnte bei dem in den Figuren 1 und 2 dargestellten Filterbeutel 1 eine Grundfläche der Seitenteile 2 und 3 nahezu rechteckig ausgestaltet werden, um eine effektive Filterfläche zu vergrößern.

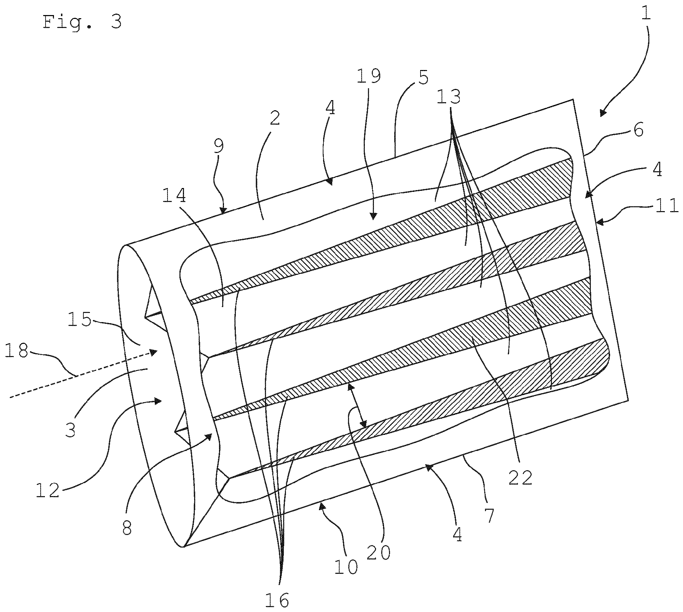

In Figur 3 ist schematisch ein Filterbeutel 1 ausschnittsweise geschnitten dargestellt, wobei sich der in Figur 3 dargestellte Filterbeutel von den in den Figuren 1 und 2 dargestellten Filterbeutel 1 dadurch unterscheidet, dass die V-förmigen Schweißabschnitte 16 jeweils durch V-förmig ausgestaltete Stegschweißnähte 22 gebildet sind. Die V-förmig ausgestalteten Stegschweißnähte 22 sind unterschiedlich schraffiert dargestellt, um zu verdeutlichen, dass die flexible Materialbahn 14 in den Schweißabschnitten 16 abwechselnd mit dem Seitenteil 2 und dem Seitenteil 3 verbunden ist.

## Patentansprüche

1. Filterbeutel (1) für Taschenluftfilter mit zwei aneinander anliegenden Seitenteilen (2, 3) aus einem luftdurchlässigen, mittels Ultraschall schweißbaren Filtermaterial, wobei die Seitenteile (2, 3) in Seitenrandabschnitten (4) auf drei Seiten (5, 6, 7) der Seitenteile (2, 3) durchgehend miteinander verschweißt sind, sodass durch die zwei miteinander verschweißten Seitenteile (2, 3) eine Tasche (8) mit zwei einander gegenüberliegenden Seitenkanten (9, 10), einer Bodenkante (11) und einer der Bodenkante (11) gegenüberliegenden Öffnung (12) gebildet wird, wobei in der Tasche (8) mehrere Stege (13) aus einer flexiblen Materialbahn (14) ausgebildet sind, wobei die Stege (13) die Seitenteile (2, 3) miteinander verbinden und von einer Öffnungsseite (15) des Filterbeutels (1) in Richtung der Bodenkante (11) verlaufend ausgerichtet sind, wobei die flexible Materialbahn (14) abwechselnd mit jeweils einem der Seitenteile (2, 3) in Schweißabschnitten (16) mindestens bereichsweise verbunden ist, die durch mindestens eine Schweißnaht längs zur Strömungsrichtung (18) begrenzt werden, sodass die flexible Materialbahn (14) in einem Schweißabschnitt (16) jeweils ausschließlich mit einem Seitenteil (2, 3) verbunden ist, wobei die Stege (13) durch Stegabschnitte (19) der flexiblen Materialbahn (14) gebildet werden, wobei die Stegabschnitte (19) jeweils zwischen zwei benachbarten Schweißabschnitten (16) verlaufen, durch die die flexible Materialbahn (14) mit beiden einander gegenüberliegenden Seitenteilen (2, 3) verbunden ist, und wobei jeweils eine durch eine Länge eines Stegabschnitts (19) zwischen den Seitenteilen (2, 3) definierte Stegabschnittsbreite (20) der Stegabschnitte (19) von der Öffnungsseite (15) zu der Bodenkante (11) hin abnimmt, **dadurch gekennzeichnet, dass** eine Schweißabschnittsbreite (21) mindestens eines Schweißabschnitts (16) von der Öffnungsseite (15) in Richtung der Bodenkante (11) mindestens abschnittsweise zunimmt.

2. Filterbeutel (1) gemäß Anspruch 1, **dadurch gekennzeichnet, dass** mindestens ein Schweißabschnitt (16) V-förmig ausgestaltet ist, sodass die Schweißabschnittsbreite (21) des mindestens einen Schweißabschnitts (16) von der Öffnungsseite (15) in Richtung der Bodenkante (11) zunimmt.

3. Filterbeutel (1) gemäß Anspruch 2, **dadurch gekennzeichnet, dass** der V-förmige Schweißabschnitt (16) durch eine V-förmig ausgestaltete Stegschweißnaht (22) gebildet ist, wobei eine Stegschweißnahtbreite der Stegschweißnaht (22) von der Öffnungsseite (15) in Richtung der Bodenkante (11) zunimmt.

4. Filterbeutel (1) gemäß Anspruch 2, **dadurch gekennzeichnet, dass** der V-förmige Schweißabschnitt (16) durch zwei benachbart zueinander angeordnete Stegschweißnähte (17) gebildet wird, wobei die Stegschweißnähte (17) so angeordnet sind, dass ein Abstand der Stegschweißnähte (17) von der Öffnungsseite (15) in Richtung der Bodenkante (11) zunimmt.

5. Filterbeutel (1) gemäß einem der voranstehenden Ansprüche, **dadurch gekennzeichnet, dass** die Schweißabschnittsbreite (21) linear zunimmt.

6. Filterbeutel (1) gemäß einem der Ansprüche 1 bis 4, **dadurch gekennzeichnet, dass** die Schweißabschnittsbreite (21) exponentiell zunimmt.

7. Filterbeutel (1) gemäß einem der voranstehenden Ansprüche, **dadurch gekennzeichnet, dass** die Stegabschnittsbreite (20) mindestens eines Stegabschnitts (19) kontinuierlich bis auf Null abnimmt.

8. Filterbeutel (1) gemäß einem der voranstehenden Ansprüche, **dadurch gekennzeichnet, dass** die flexible Materialbahn (14) luftdurchlässig ist.

## Claims

1. Filter bag (1) for pocket air filters with two side parts (2, 3) resting against each other and made of an air-permeable filter material weldable by ultrasonic welding, wherein the side parts (2, 3) are continuously welded to one another in side edge portions (4) on three sides (5, 6, 7) of the side parts (2,3), so that a pocket (8) having two side edges (9, 10) opposite to one another, a bottom edge (11) and an opening (12) opposite the bottom edge (11) is formed, wherein multiple webs (13) made of a flexible material sheet (14) are formed in the pocket (8), wherein the webs (13) connect the side parts (2, 3) to one another and are oriented in a manner extending from an opening side (15) of the filter bag (1) in the direction of the bottom edge (11), wherein the flexible material sheet (14) is, at least in regions, alternatingly connected with respectively one of the side parts (2, 3) in welding portions (16) delimited by at least one weld seam alongside the flow direction (18), so that the flexible material sheet (14), in a welding portion (16), is respectively exclusively connected with one side part (2, 3), wherein the webs (13) are formed by web portions (19) of the flexible material sheet (14), wherein the web portions (19) respectively extend between two neighboring welding portions (16), by means of which the flexible material sheet (14) is connected with both opposite side parts (2, 3), and wherein a web portion width (20) of the web portions (19) defined by a length of the web portion (19) between the side parts (2, 3) decreases from the opening side (15) towards the bottom edge (11), **characterized in that** a welding portion width (21) of at least one welding portion (16) increases at least in sections, from the opening side (15) in the direction of the bottom edge (11).

2. Filter bag (1) according to claim 1, **characterized in that** at least one welding portion (16) is of V-shaped design, so that the welding portion width (21) of the at least one welding portion (16) increases from the opening side (15) in the direction of the bottom edge (11).

3. Filter bag (1) according to claim 2, **characterized in that** the V-shaped welding portion (16) is formed by a V-shaped web weld seam (22), wherein a web weld seam width of the web weld seam (22) increases from the opening side (15) in the direction of the bottom edge (11).

4. Filter bag (1) according to claim 2, **characterized in that** the V-shaped welding portion (16) is formed by two adjacently-arranged web weld seams (17), wherein the web weld seams (17) are arranged in such a way that a distance of the web weld seams (17) increases from the opening side (15) in the direction of the bottom edge (11).

5. Filter bag (1) according to one of the preceding claims, **characterized in that** the welding portion width (21) increases linearly.

6. Filter bag (1) according to one of claims 1 to 4, **characterized in that** the weld portion width (21) increases exponentially.

7. Filter bag (1) according to one of the preceding claims, **characterized in that** the web portion width (20) of a web portion (19) decreases continually down to zero.

8. Filter bag (1) according to one of the preceding claims, **characterized in that** the flexible material sheet (14) is permeable to air.

## Revendications

1. Sac filtrant (1) pour des filtres à air à poche comprenant deux parties latérales (2, 3) adjacentes l'une à l'autre en un matériau filtrant perméable à l'air pouvant être soudé par ultrasons, les parties latérales (2, 3) étant soudées ensemble de manière continue dans des portions de bord latérales (4) sur trois côtés (5, 6, 7) des parties latérales (2, 3), de telle sorte que, par les deux parties latérales (2, 3) soudées ensemble, une poche (8) avec deux bords latéraux (9, 10) opposés, un bord inférieur (11) et une ouverture (12) opposée au bord inférieur (11) est formée, plusieurs nervures (13) en une bande de matériau flexible (14) étant formées dans la poche (8), les nervures (13) reliant les parties latérales (2, 3) l'une à l'autre et étant orientés de manière à s'étendre d'un côté ouverture (15) du sac filtrant (1) en direction du bord inférieur (11), la bande de matériau flexible (14) étant reliée au moins par endroits en alternance à respectivement une des parties latérales (2, 3) dans des parties de soudage (16), qui sont délimitées longitudinalement par rapport au sens d'écoulement (18) par au moins un cordon de soudure, de telle sorte que la bande de matériau flexible (14) est reliée respectivement uniquement à une partie latérale (2, 3) dans une partie de soudage (16), les nervures (13) étant formées par des parties de nervure (19) de la bande de matériau flexible (14), les parties de nervure (19) s'étendant respectivement entre deux parties de soudage (16) voisines, par lesquelles la bande de matériau flexible (14) est reliée aux deux parties latérales (2, 3) opposées l'une à l'autre, et dans lequel respectivement une largeur de partie de nervure (20) des parties de nervure (19) définie par une longueur d'une partie de nervure (19) entre les parties latérales (2, 3) diminue depuis le côté ouverture (15) jusqu'au bord inférieur (11), **caractérisé en ce qu'**une largeur de partie de soudage (21) d'au moins une partie de soudage (16) augmente au moins sur certaines parties du côté ouverture (15) en direction du bord inférieur (11).

2. Sac filtrant (1) selon la revendication 1, **caractérisé en ce qu'**au moins une partie de soudage (16) est réalisée en forme de V, de telle sorte que la largeur de partie de soudage (21) de l'au moins une partie de soudage (16) augmente du côté ouverture (15) en direction du bord inférieur (11).

3. Sac filtrant (1) selon la revendication 2, **caractérisé en ce que** la partie de soudage (16) en forme de V est formée par un cordon de soudure de nervure (22) réalisé en forme de V, une largeur de cordon de soudure de nervure du cordon de soudure de nervure (22) augmentant du côté ouverture (15) en direction du bord inférieur (11).

4. Sac filtrant (1) selon la revendication 2, **caractérisé en ce que** la partie de soudage (16) en forme de V est formée par deux cordons de soudure de nervure (17) disposés l'un à côté de l'autre, les cordons de soudure de nervure (17) étant disposés de telle manière qu'une distance entre les cordons de soudure de nervure (17) augmente du côté ouverture (15) en direction du bord inférieur (11).

5. Sac filtrant (1) selon l'une des revendications précédentes, **caractérisé en ce que** la largeur de partie de soudage (21) augmente de manière linéaire.

6. Sac filtrant (1) selon l'une des revendications 1 à 4, **caractérisé en ce que** la largeur de partie de soudage (21) augmente de manière exponentielle.

7. Sac filtrant (1) selon l'une des revendications précédentes, **caractérisé en ce que** la largeur de partie de nervure (20) d'au moins une partie de nervure (19) diminue en continu jusqu'à zéro.

8. Sac filtrant (1) selon l'une des revendications précédentes, **caractérisé en ce que** la bande de matériau flexible (14) est perméable à l'air.
